# EUROPEAN PATENT APPLICATION

(11) **EP 4 418 549 A1**
(43) Date of publication of application: **21.08.2024**
(21) Application number: 24156178.6
(22) Date of filing: 07.02.2024
(51) Int. Cl.: H04B 7/0404, H04B 7/06

(54) **METHODS AND APPARATUSES FOR CODEBOOK-BASED UPLINK TRANSMISSION**

(30) Priority: 16.02.2023 FI 20235172
(71) Applicant: Nokia Technologies Oy, 02610 Espoo (FI)
(72) Inventor: HAKOLA, Sami-Jukka, Kempele (FI); KOSKELA, Timo, Oulu (FI); KARJALAINEN, Juha Pekka, Sotkamo (FI)
(74) Representative: Nokia EPO representatives

(57) **Abstract**

Example embodiments of the present disclosure relate to methods and apparatuses for codebook-based uplink transmission. A first apparatus obtains a codepoint value and determines at least one table entry for precoding based on the codepoint value. The codepoint value indicates selection of a transmission mode and one or multiple maximum ranks, and at least a maximum rank of a first codepoint value is different from a maximum rank of a second codepoint value. Through this solution, multi-panel simultaneous transmission in the scenarios of single and multiple transmission-reception points (TRPs) can be supported in a simple and easily adoptable way.

## Description

### CROSS-REFERENCE TO RELATED APPLICATION(S)

The present application claims priority from Finland National Patent Application No. 20235172, filed on February 16, 2023 and entitled "METHODS AND APPARATUSES FOR CODEBOOK-BASED UPLINK TRANSMISSION," which is incorporated by reference herein in its entirety.

### FIELDS

Various example embodiments of the present disclosure generally relate to the field of telecommunication, and in particular, to methods, apparatuses and computer readable storage medium for codebook-based uplink transmission.

### BACKGROUND

In 3GPP 5G New Radio (NR), Demodulation Reference Signal (DMRS) and Phase Track Reference Signal (PT-RS) are reference signals associated with physical uplink channel (PUSCH) that carries user data. DMRS is used for channel estimation as part of coherent demodulation of PUSCH. PT-RS is introduced to compensate for the common phase error (CPE). Phase noise produced in local oscillators introduces a significant degradation at millimetre (mmWave) frequencies. It produces CPE and inter-carrier interference (ICI). CPE leads to an identical rotation of a received symbol in each subcarrier. ICI leads to a loss of orthogonality between the subcarriers. PT-RS is used mainly to estimate and minimize the effect of CPE on system performance.

The time-frequency structure of reference signals depends on the type of waveform configured for PUSCH. When transform precoding is disabled, the waveform configured is cyclic-prefix-orthogonal frequency division multiplexing (CP-OFDM). When transform precoding is enabled, the waveform configured is discrete-Fourier-transform-spread orthogonal frequency division multiplexing (DFT-S-OFDM). Two transmission schemes have been supported for PUSCH that supports explicit transmitting (TX) beam indications, namely, codebook-based transmission and non-codebook-based transmission.

### SUMMARY

In a first aspect of the present disclosure, there is provided a first apparatus. The first apparatus comprises one or more processors; and one or more transceivers coupled to the one or more processors, wherein the one or more transceivers are configured with the one or more processors to cause the first apparatus to: obtain a codepoint value, wherein the codepoint value indicates selection of a transmission mode and one or multiple maximum ranks, and at least a maximum rank of a first codepoint value is different from a maximum rank of a second codepoint value; and determine at least one table entry for precoding based on the codepoint value.

In a second aspect of the present disclosure, there is provided a second apparatus. The second apparatus comprises one or more processors; and one or more transceivers coupled to the one or more processors, wherein the one or more transceivers are configured with the one or more processors to cause the second apparatus to: determine a codepoint value for a first apparatus, wherein the codepoint value indicates selection of a transmission mode and one or multiple maximum ranks, and at least a maximum rank of a first codepoint value is different from a maximum rank of a second codepoint value; and transmit the codepoint value to the first apparatus.

In a third aspect of the present disclosure, there is provided a method. The method comprises: obtaining, at a first apparatus, a codepoint value, wherein the codepoint value indicates selection of a transmission mode and one or multiple maximum ranks, and at least a maximum rank of a first codepoint value is different from a maximum rank of a second codepoint value; and determining at least one table entry for precoding based on the codepoint value.

In a fourth aspect of the present disclosure, there is provided a method. The method comprises: determining, at a second apparatus, a codepoint value for a first apparatus, wherein the codepoint value indicates selection of a transmission mode and one or multiple maximum ranks, and at least a maximum rank of a first codepoint value is different from a maximum rank of a second codepoint value; and transmitting the codepoint value to the first apparatus.

In a fifth aspect of the present disclosure, there is provided a first apparatus. The first apparatus comprises means for obtaining a codepoint value, wherein the codepoint value indicates selection of a transmission mode and one or multiple maximum ranks, and at least a maximum rank of a first codepoint value is different from a maximum rank of a second codepoint value; and means for determining at least one table entry for precoding based on the codepoint value.

In a sixth aspect of the present disclosure, there is provided a second apparatus. The second apparatus comprises means for determining a codepoint value for a first apparatus, wherein the codepoint value indicates selection of a transmission mode and one or multiple maximum ranks, and at least a maximum rank of a first codepoint value is different from a maximum rank of a second codepoint value; and means for transmitting the codepoint value to the first apparatus.

In a seventh aspect of the present disclosure, there is provided a first apparatus. The first apparatus comprises one or more processors; and one or more memories storing instructions that, when executed by the one or more processors, cause the first apparatus at least to: obtain a codepoint value, wherein the codepoint value indicates selection of a transmission mode and one or multiple maximum ranks, and at least a maximum rank of a first codepoint value is different from a maximum rank of a second codepoint value; and determine at least one table entry for precoding based on the codepoint value.

In an eighth aspect of the present disclosure, there is provided a second apparatus. The second apparatus comprises one or more processors; and one or more memories storing instructions that, when executed by the one or more processors, cause the second apparatus at least to: determine a codepoint value for a first apparatus, wherein the codepoint value indicates selection of a transmission mode and one or multiple maximum ranks, and at least a maximum rank of a first codepoint value is different from a maximum rank of a second codepoint value; and transmit the codepoint value to the first apparatus.

In a ninth aspect of the present disclosure, there is provided a computer readable medium. The computer readable medium comprises instructions stored thereon for causing an apparatus to perform at least the method according to the third aspect.

In a tenth aspect of the present disclosure, there is provided a computer readable medium. The computer readable medium comprises instructions stored thereon for causing an apparatus to perform at least the method according to the fourth aspect.

In an eleventh aspect of the present disclosure, there is provided a computer program comprising instructions which, when executed by an apparatus, cause the apparatus to perform at least the method according to the third aspect.

In a twelve aspect of the present disclosure, there is provided a computer program comprising instructions which, when executed by an apparatus, cause the apparatus to perform at least the method according to the fourth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2 illustrates a signaling flow for communication according to some example embodiments of the present disclosure;
FIG. 3A to FIG. 3D illustrate example diagrams of codebook-based uplink transmissions according to some example embodiments of the present disclosure;
FIG. 4 illustrates a flowchart of a method implemented at a first apparatus according to some example embodiments of the present disclosure;
FIG. 5 illustrates a flowchart of a method implemented at a second apparatus according to some example embodiments of the present disclosure;
FIG. 6 illustrates a simplified block diagram of a device that is suitable for implementing example embodiments of the present disclosure; and
FIG. 7 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second" and the like may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the fourth generation (4G), 4.5G, the fifth generation (5G) communication protocols, and/or any other protocols, for example 5G beyond. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

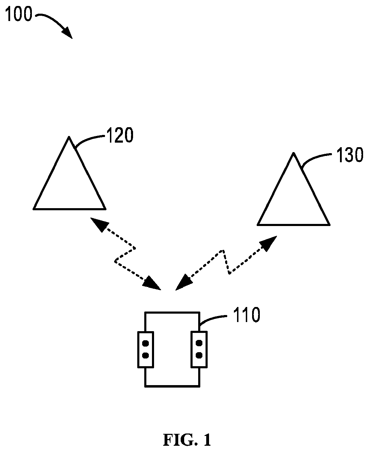

FIG. 1 illustrates an example communication environment 100 in which example embodiments of the present disclosure can be implemented. The communication environment 100 comprises a plurality of communication devices, including a first apparatus 110, a second apparatus 120 and a third apparatus 130, which can communicate with each other.

In the example of FIG. 1, the first apparatus 110 may be a terminal device, for example, with one or more antenna panels. Each of the antenna panels has one or more antenna ports. The second apparatus 120 and the third apparatus 130 may be network devices. A serving area of the second apparatus 120 or the third apparatus 130 may be called a cell. In some example embodiments, the second apparatus 120 or the third apparatus 130 may be for example a transmission-reception point (TRP) with one or more antenna ports. As used herein, a TRP or network device may be corresponding to / replaced by / represented by at least one of: a PCI (physical cell identifier), a control resource set (CORESET) Pool index, a timing advance group (TAG), or a set of TCI (transmission configuration indicator) states.

Communications in the communication environment 100 may be implemented according to any proper communication protocol(s), comprising, but not limited to, the third generation (3G), the fourth generation (4G), the fifth generation (5G), the sixth generation (6G), and beyond, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

It is to be understood that the number of devices and their connections shown in FIG. 1 are only for the purpose of illustration without suggesting any limitation. The communication environment 100 may include any suitable number of devices configured to implementing example embodiments of the present disclosure. Although not shown, it would be appreciated that one or more additional devices may be located comprised in the communication environment 100. It is noted that although being illustrated as a terminal device, the first apparatus 110 may be other device than a terminal device. Although being illustrated as a network device, the second apparatus 120 or the third apparatus 130 may be a further device other than a network device.

In the following, for the purpose of illustration, some example embodiments are described with the first apparatus 110 operating as a terminal device and the second apparatus 120 or the third apparatus 130 operating as a network device or TRP. However, in some example embodiments, operations described in connection with a terminal device may be implemented at a network device or other device, and operations described in connection with a network device may be implemented at a terminal device or other device.

In some example embodiments, if the first apparatus 110 is a terminal device and the second apparatus 120 and the third apparatus 130 are network devices, a link from the second apparatus 120 or the third apparatus 130 to the first apparatus 110 is referred to as a downlink (DL), while a link from the first apparatus 110 to the second apparatus 120 or the third apparatus 130 is referred to as an uplink (UL). In DL, the second apparatus 120 or the third apparatus 130 is a transmitting (TX) device (or a transmitter) and the first apparatus 110 is a receiving (RX) device (or a receiver). In UL, the first apparatus 110 is a TX device (or a transmitter) and the second apparatus 120 or the third apparatus 130 is a RX device (or a receiver).

FIG. 1 shows a multi-TRP (mTRP) scenario where the first apparatus 110 may support communication with two or more TRPs (e.g., the second apparatus 120 and third apparatus 130). In some examples of the multi-TRP scenario, a single downlink control information indicator (S-DCI) may be used for time-division multiplexing (TDM) multi-TRP (M-TRP) physical uplink shared channel (PUSCH) repetition and antenna panel selection. In the context of multi-TRP scenario, there is a need to enhance reliability of uplink transmission.

Based on capability set index reporting of the first apparatus 110, the second apparatus 120 or the third apparatus 130 may be aware of the antenna panel(s) (including information on the number of UL SRS antenna ports) specific transmission capability of UL SRS codebook-based transmission in a certain spatial UL direction. Based on such information, the second apparatus 120 or the third apparatus 130 may trigger the first apparatus 110 to transmit two different UL SRS resource sets with the usage of codebook to obtain TRP-specific Transmit Precoding Matrix Identity (TPMI) hypotheses (i.e., determine precoder index and rank selection) antenna panel specifically for PUSCH transmissions. Two different UL SRS resource sets may be configured with two different DL TCI states, joint DL and UL TCI state, or UL TCI states associated as the spatial source.

Based on the obtained TRP-specific TPMI and SRI information, the second apparatus 120 or the third apparatus 130 may trigger non-simultaneous TRP-specific PUSCH transmission by indicating, via DCI, a codepoint for a single SRS resource set indicator. In some cases, two bits, and thereby four values, may be reserved for the codepoint when two SRS resource sets are configured with usage of codebook. Otherwise, in the non-codebook, there will be zero bit. The first value out of the four possible values of the codepoint may be used to indicate which of the two SRS resource indicators (SRIs), the first SRI or the second SRI, is used to enable dynamic switching between a single TRP (either the second apparatus 120 or the third apparatus 130) PUSCH transmission in time division multiplexing (TDM) manner. The other remaining values of the two bits may be used to enable multi-TRP PUSCH transmission with the second apparatus 120 and the third apparatus 130 in TDM manner with repetition.

Further, either cyclical or sequential mapping may be configured via radio resource control (RRC) signaling for mapping two SRIs for PUSCH repetitions. Moreover, for codebook-based transmission, the DCI includes two separate codepoint fields for SRIs and two precoding information and number of transmission layers fields. It is worth noting that the first field indicates the number of transmission layers, whereas the second field does not. For non-codebook based transmission, the DCI may comprise two SRI codepoint fields, where the first one indicates the transmission layers and the second one does not. Based on the received S-DCI, the first apparatus 110 may then perform the PUSCH transmission using the multiple antenna panels (for example, only one panel at a time).

The first apparatus 110 may be configured for either codebook or non-codebook based uplink transmission (e.g., PUSCH transmission). In other words, based on this configuration, the first apparatus 110 may assume that upon reception of DCI with or without uplink grant, SRS indicators and precoding information are associated with either codebook or non-codebook based PUSCH transmission.

PUSCH is the physical channel that carries the user data. The resources allocated for PUSCH may be generally within the bandwidth part (BWP) of a carrier. The resources in time domain for PUSCH transmission are scheduled by downlink control information (DCI), for example, in a field named Time domain resource assignment. This field may indicate the slot offset K0, starting symbol S, the allocation length Z, and the mapping type of PUSCH. The valid combinations of ***S*** and ***L*** are shown in Table 1.

**Table 1: Valid S and L combinations**

| **PUSCH Mapping Type** | **Normal Cyclic Prefix** | | | **Extended Cyclic Prefix** | | |
|---|---|---|---|---|---|---|
| | ***S*** | ***L*** | ***S+L*** | ***S*** | ***L*** | ***S+L*** |
| Type A | 0 | {4,...,14} | {4,...,14} | 0 | {4,...,12} | {4,...,12} |
| Type B | {0,...,13} | {1,...,14} | {1,...,14} | {0,...,11} | {1,...,12} | {1,...,12} |

The resources in the frequency domain for PUSCH transmission are scheduled by a DCI, for example, in a field named Frequency domain resource assignment. This field may indicate whether the resource allocation of resource blocks (RBs) is contiguous or non-contiguous, based on the allocation type. The RBs allocated are within the BWP.

While further enhancing uplink MIMO, enhancements on downlink MIMO that facilitate the use of large antenna array, not only for FR1 but also for FR2, are also introduced to fulfil the request for evolution of NR deployments. For example, higher peak data rate for UL could play a significant role in short-range applications such as home entertainment, video surveillance, monitoring in industrial, healthcare, safety, IAB, and other applications where devices power, form-factor and cost are not as stringent as in traditional handheld devices. UL transmission with more than four transmitters is useful to bridge the gap between DL and UL spectral efficiency, in both FR1 and FR2. Hence, there is strong need to develop methods and/or signalling solutions to overcome this problem.

It is desired to provide support for simultaneous multi-panel UL transmission for higher UL throughput/reliability, focusing on FR2 and multi-TRP and assuming two or more TRPs and two or more antenna panels.

In some example embodiments, a UL precoding indication is used for PUSCH, where no new codebook is introduced for multi-panel simultaneous transmission. In some example embodiments, the total number of layers is up to four across all panels and total number of codewords is up to two across all panels, considering single DCI and multi-DCI based multi-TRP operation. In some example embodiments, a UL beam indication is used for Physical Uplink Shared Channel (PUCCH)/PUSCH, considering single DCI and multi-DCI based multi-TRP operation. For the case of multi-DCI based multi-TRP operation, only PUSCH and PUSCH, or PUCCH and PUCCH is transmitted across two panels in a same Component Carrier (CC).

Example embodiments of the present disclosure are related to single-DCI single and multi-panel simultaneous PUSCH transmission. The first apparatus 110 may be configured to use a single-frequency network (SFN) or spatial division multiplexing (SDM) transmission mode. In the SDM scheme, different layers or DMRS ports of one PUSCH are separately pre-coded and transmitted from different antenna panels of the first apparatus 110 simultaneously. In the SFN-based transmission scheme, the same PUSCH or DMRS are transmitted from two antenna panels of the first apparatus 110 with different Transmission Configuration Indicator (TCI) states. In both SDM and SFN, the first apparatus 110 may be provided separate precoder matrixes for each transmitting panel in DCI via two TPMI entries.

Inventors note that in certain scenarios, it is beneficial from performance point of view to transmit simultaneously with multiple panels even in a single-TRP (s-TRP) scenario instead of with a single panel. Thus, Inventors opine that it is possible to use both options: 1) a single panel and 2) simultaneous two-panel transmission in the single-TRP (a single receiving TRP) situation. Then, in SDM, the two-bit DCI field named "SRS resource set indicator" may dynamically indicate the sTRP or SDM transmission, which may have the following interpretations for the codepoints:
- "00" indicates a transmission is to be performed with a first single-TRP (also referred to as "sTRP 0") having a single panel (also referred to as "panel 0"), where the first resource set is in use;
- "01" indicates a transmission is to be performed with a second single-TRP (also referred to as "sTRP 1") having a single panel (also referred to as "panel 1"), where the second resource set is in use;
- "10" indicates two-panel (SDM) single-TRP;
- "11" indicates two-panel (SDM) multi-TRP.

A single TRP is having typically two receiving antenna ports and multi-TRP (for example, two receiving TRPs) is having typically altogether four receiving antenna ports. Similarly, if the first apparatus 110 (e.g., a terminal device) is transmitting with a single panel, the max number of transmitting antenna ports is two. And if the first apparatus 110 is performing a two-panel transmission, the number of transmitting antenna ports is four (assuming that each antenna panel has two antenna ports). In this case, the maximum ranks corresponding to different codepoints may have the following interpretations:
- "00" indicates sTRP 0 with a maximum rank of 2 (min(TX, RX) = min(2, 2)).
- "01" indicates sTRP 1 with a maximum rank of 2 (min(TX, RX) = min(2, 2)).
- "10" indicates two-panel (SDM) sTRP with a maximum rank of 2 (min(TX, RX) = min(4, 2)).
- "11" indicates two-panel (SDM) mTRP with a maximum rank of 4 (min(TX, RX) = min(4, 4)).

Inventors also note that in SDM case, there may be a reduction in the maximum rank when a terminal device is triggered to transmit in the SDM manner to a single-TRP where the receiving TRP is having the limiting capability, not the terminal device. For example, the terminal device with two panels can provide four antenna ports for transmitting while the single-TRP can provide only two antenna ports for receiving. The single maximum rank may be derived as min(TX, RX) = min(4, 2)=2. There may be similar maximum rank restrictions for multi-panel simultaneous transmission with multiple TRPs.

According to some example embodiments of the present disclosure, there is provided a solution for codebook-based uplink transmission. Specifically, one or multiple maximum ranks for uplink transmission is determined based on a codepoint value provided for a first apparatus. The codepoint value for the transmission mode and maximum rank selection is configured with one or more maximum ranks, or the codepoint value indicates both the transmission mode and one or more maximum ranks. That is, there is an association between codepoint values, transmission modes, and maximum rank structures. In some cases, one or more of the different codepoint values can indicate multiple maximum ranks. Based on the received codepoint value, a first apparatus can determine at least one correct table entry for precoding.

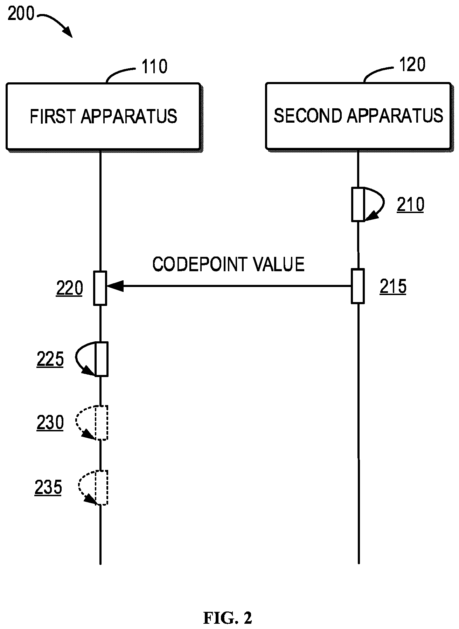

Reference is now made to FIG. 2, which shows a signaling flow 200 for communication according to some example embodiments of the present disclosure. For the purpose of discussion, reference is made to FIG. 1 to describe the signaling flow 200. As shown in FIG. 2, the signaling flow 200 involves the first apparatus 110 and the second apparatus 120 which is assumed to transmit control information for the first apparatus 110. It is to be understood that the signaling flow 200 may also be applied for interactions between the first apparatus 110 and the third apparatus 130 and/or other suitable apparatuses. In the signaling flow 200, the first apparatus 110 may be configured with one or more antenna panels, each having one or more antenna ports, and may be simultaneously communicate with multiple apparatuses, such as the second apparatus 120 and the third apparatus 130.

In the signaling flow 200, the second apparatus 120 determines (210) a codepoint value for the first apparatus 110. The codepoint value indicates selection of a transmission mode, for example, a single-panel transmission mode or a multi-panel transmission mode. In addition, the codepoint value also indicates selection of one or multiple maximum ranks. That is, there is an association between codepoint values, transmission modes, and maximum rank structures. Such an association is configured for the first apparatus 110, for example, via RRC signaling.

The codepoint value (or the transmission mode and/or the maximum rank structure) for the first apparatus 110 may be determined based at least in part on capability information of the first apparatus 110, and may be further based on capability information of the TRP(s) to be communicated with the first apparatus 110.

In some example embodiments, the first apparatus 110 may transmit its capability information to support simultaneous multi-panel (for example, two-panel) UL transmission on PUSCH. In some example embodiments, the capability information may include a simultaneous multi-panel transmission capability, for example, indicating whether the first apparatus 110 supports simultaneous multi-panel transmission. Alternatively, or in addition, the capability information may include respective transmission capabilities for multiple antenna panels, e.g., a maximum rank per SRS resource set (which is corresponding to a panel of the first apparatus). The maximum rank for each SRS resource set (or each antenna panel) may be determined at least based on the number of antenna ports comprised in the antenna panel.

With the capability information of the first apparatus 110, the second apparatus 120 (perhaps the third apparatus 130 or another network device), may have the knowledge of the capability of the first apparatus 110 and thus determine a configuration of the simultaneous multi-panel UL transmission of the first apparatus 110. The configuration, for example, may indicate that the simultaneous multi-panel UL transmission is codebook-based transmission. In some example embodiments, the second apparatus 120 may determine how to select an appropriate codepoint for the first apparatus 110. In some implementations, in addition to the capability information of the first apparatus 110, the second apparatus 120 may take into its own capability information, capability information of the third apparatus 130, and/or other relevant factors to select a codepoint for the first apparatus 110.

The second apparatus 120 transmits (215) the codepoint value to the first apparatus 110. The codepoint value may be transmitted (215) in various ways. For example, the codepoint value may be comprised in the above discussed configuration. Alternatively, the counterpoint value may transmitted separately from the configuration. For example, the codepoint value may be transmitted in downlink control information (DCI) or a media access control (MAC) control element (CE). As a specific example, the codepoint value may be conveyed via a SRS resource set indicator field in DCI. It is to be understood that the above illustrated DCI and MAC CE are just examples for transmitting the codepoint value. Any other suitable information/message/signaling may be also applicable.

As mentioned above, a codepoint value may indicate a transmission mode and one or multiple maximum ranks. The transmission mode (e.g., a single-panel transmission mode or a multi-panel transmission mode) may be determined according to one or more SRIs of one or more SRS resource sets, precoding information, and/or a number of layers, for example, in DCI received by the first apparatus 110.

The maximum rank structure may comprise one or multiple maximum ranks. In some example embodiments, if a single antenna panel is used for transmission according to an associated transmission mode, a single maximum rank is indicated for the corresponding antenna panel. In some example embodiments, if multiple panels are used for transmission according to an associated transmission mode, multiple maximum ranks are indicated for the multiple panels, respectively. The multiple maximum ranks indicated by a codepoint value may be the same or different from each other.

In some example embodiments, a maximum rank may be associated with a table entry for precoding. Accordingly, if a codepoint value indicates one maximum rank, then a single table entry may be determined, and if a codepoint value indicates multiple maximum ranks, then multiple table entries may be determined. The multiple table entries may refer to the same or different table entries for the multiple panels of the first apparatus 110. In some example embodiments, a codepoint value indicating multiple maximum ranks is applied when the SDM is triggered. The SDM may comprise SDM to a single TRP, or SDM to different TRPs.

In some example embodiments, a codepoint may have for example two bits, with four possible values. The four possible codepoint values are discussed in detail below. It should be noted that two-bit codepoint is just an example and two panels for the first apparatus 110 is also an example. More bits for a codepoint and more panels are possible.

In some example embodiments, a codepoint value (e.g., a two-bit value of "00") may indicate a maximum rank associated with a single table entry, and a first single-panel transmission mode. The first single-panel transmission mode may be determined according to a sounding reference signal, SRS, resource identity, SRI, of a first SRS resource set. For example, the first SRS resource set may be associated with a first antenna panel of the first apparatus 110, so the first SRI of the first SRS resource set may indicate that the first antenna panel is applied in the first single-panel transmission mode towards a TRP. The single table entry associated with the codepoint value "00" may be associated with a maximum rank. This maximum rank may be determined based on the number of transmitting antenna ports in the first antenna panel, and may further determined based on the number of receiving antenna ports of the TRP. In some example embodiments, the maximum rank may be larger than one. In some examples, the maximum rank is two, assuming that the number of transmitting antenna ports of the first antenna panel is two and the number of receiving antenna ports at the receiving TRP is also two. Maximum rank more than two is also possible and the maximum rank of two is used as example in the present disclosure.

In some example embodiments, another codepoint value (e.g., a two-bit value of "01") may indicate a maximum rank associated with a single table entry, and a second single-panel transmission mode. Analogous to the above example embodiments, the maximum rank associated with the single table entry may comprise a maximum rank over one. With regard to the second single-panel transmission mode, it may be determined according to a SRI of a second SRS resource set. For example, the second SRS resource set may be associated with a second antenna panel of the first apparatus 110, so the second SRI of the first SRS resource set may indicate that the second antenna panel is applied in the second single-panel transmission mode towards a TRP. The single table entry associated with the codepoint value "01" may be associated with a maximum rank. This maximum rank may be determined based on the number of transmitting antenna ports in the second antenna panel, and may further determined based on the number of receiving antenna ports of the TRP. In some example embodiments, the maximum rank may be larger than one. In some examples, the maximum rank is two, assuming that the number of transmitting antenna ports of the second antenna panel is two and the number of receiving antenna ports at the receiving TRP is also two.

In some example embodiments, a further codepoint value (e.g., a two-bit value of "10") may indicate multiple maximum ranks associated with multiple table entries respectively, and a first multi-panel transmission mode. The first multi-panel transmission mode may be determined according to respective SRIs of the first and second SRS resource sets, precoding information, and a number of layers. In some example embodiments, the first multi-panel transmission mode may comprise a multi-panel transmission mode (e.g., a SDM transmission mode) towards a single TRP. That is, the first apparatus 110 may perform multi-panel simultaneous transmissions to a single TRP. For example, the SRIs of the first and second SRS resource sets may indicate that both the first and second antenna panels of the first apparatus 110 are applied for transmission in the first multi-panel transmission mode. In some example embodiments, the precoding information and number of layers may be indicated in DCI, for example, in the Precoding information and number of layers field.

In some example embodiments, for the codepoint value of "10", the multiple maximum ranks associated with the multiple table entries may be applied for the multiple panels of the first apparatus 110. The respective multiple maximum ranks may be determined based on the number of transmitting antenna ports of each antenna panel of the first apparatus 110, and may further based on the number of receiving antenna ports of the single receiving TRP. In some example embodiments, assuming that each antenna panel of the first apparatus 110 has two transmitting antenna ports and the single receiving TRP has two receiving antenna ports, then the multiple maximum ranks comprise two maximum ranks, one and one. Each maximum rank may be associated with one table entry for precoding. In other cases, one or all of the maximum ranks may be larger than one.

In some example embodiments, a yet further codepoint value (e.g., a two-bit value of "11") may indicate multiple maximum ranks associated with multiple table entries respectively, and a second multi-panel transmission mode. The second multi-panel transmission mode may be determined according to respective SRIs of the first and second SRS resource sets, precoding information, and a number of layers. In some example embodiments, the second multi-panel transmission mode may comprise a multi-panel transmission mode (e.g., a SDM transmission mode) towards multiple TRPs, e.g., two TRPs. That is, the first apparatus 110 may perform multi-panel simultaneous transmissions to multiple TRPs. For example, the SRIs of the first and second SRS resource sets may indicate that both the first and second antenna panels of the first apparatus 110 are applied for transmission in the second multi-panel transmission mode. In some example embodiments, the precoding information and number of layers may be indicated in DCI.

In some example embodiments, for the codepoint value of "11", the multiple maximum ranks associated with the multiple table entries may be applied for the multiple panels of the first apparatus 110. The respective multiple maximum ranks may be determined based on the number of transmitting antenna ports of each antenna panel of the first apparatus 110, and may further based on the number of receiving antenna ports of each of the multiple receiving TRPs. In some example embodiments, assuming that each antenna panel of the first apparatus 110 has two transmitting antenna ports and each of the multiple receiving TRPs has two receiving antenna ports, then the multiple maximum ranks comprise two maximum ranks, two and two. Each maximum rank may be associated with one table entry for precoding. In other cases, one or all of the maximum ranks may be smaller than one, and/or larger than two.

According to example embodiments of the present disclosure, at least a maximum rank of a first codepoint value is different from a maximum rank of a second codepoint value. For instance, as discussed above, a 2-bit codepoint may have four possible values, that is, a codepoint value "00"" corresponding to a single table entry maximum rank "2"; a codepoint value "01"" corresponding to a single table entry maximum rank "2"; a codepoint value "10" corresponding to two table entry maximum ranks, "1" and "1" (the two entries correspond to total number of receiving antenna ports at the receiving apparatus)); and a codepoint value "11" corresponding to two table entry maximum ranks, "2" and "2". It can be seen that at least a maximum rank of the codepoint value "10" is different from a maximum rank of the codepoint value "11". In the meanwhile, a maximum rank of the codepoint value "10" is different from the maximum rank of the codepoint value "00" or the codepoint value "01".

The first apparatus 110 obtains (220) the codepoint value, e.g., from the received DCI or MAC CE. In some example embodiments, the first apparatus 110 may receive information about the codepoint value from the second apparatus 120. For example, the first apparatus 110 may receive DCI triggering the PUSCH transmission, read the SRS resource set indicator from the DCI to determine the codepoint value.

With the codepoint value, the first apparatus 110 determines (225) at least one table entry for precoding. As mentioned above, each of the one or multiple maximum ranks indicated by the codepoint value is associated with a table entry. For example, there is a codepoint specific maximum rank structure (single or multiple maximum ranks) for transmission. Thus, the first apparatus 110 may determine the associated table entry (entries) associated with the one or multiple maximum ranks indicated by the received codepoint value. Further, the first apparatus 110 may determine, based on the obtained codepoint value, the transmission mode to be applied, e.g., the first or second single-panel transmission mode, or the first or second multi-panel transmission mode. A table entry may also be referred to as a precoder table.

In some example embodiments, the first apparatus 110 may determine (230) a transmit precoding matrix identity (TPMI) based on the at least one table entry. In some example embodiments, based on the codepoint value, the first apparatus 110 may determine the one or more correct table entries to map the precoding information and number of layers field in the DCI to the TPMI to be applied. For example, if the codepoint value obtained by the first apparatus 110 is a two-bit value of "10" which indicates maximum ranks, "1" and "1", the first apparatus 110 may apply a first table entry associated with the maximum rank of "1" and also the first table entry associated with the other maximum rank of "1" for both panels, assuming both panels are having two antenna ports. That is, the first table entry may be applied separately for each of the two antenna panels of the first apparatus 110, for multi-panel simultaneous transmission towards a single TRP.

Table 2 shows an example of the first table entry to map the precoding information and number of layers field in the DCI to the TPMI. This example table entry may be mapped to precoding information and number of layers or second precoding information, for 4 antenna ports, if transform precoder is enabled and *ul-FullPowerTransmission* is either not configured or configured to *fullpowerMode2* or configured to *fullpower,* or if transform precoder is disabled, *maxRank* = 1, and *ul-FullPowerTransmission* is not configured or configured to *fullpowerMode2* or configured to *fullpower.*

**Table 2**

| Bit field mapped to index | *codebookSubset = fullyAndPartialAnd Noncoherent* | Bit field mapped to index | *codebookSubset= partialAnd Noncoherent* | Bit field mapped to index | *codebookSubset= nonCoherent* |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| ... | ... | ... | ... | | |
| 11 | 1 layer: TPMI=11 | 11 | 1 layer: TPMI=11 | | |
| 12 | 1 layer: TPMI=12 | 12-15 | reserved | | |
| ... | ... | | | | |
| 27 | 1 layer: TPMI=27 | | | | |
| 28-31 | reserved | | | | |

In case that the codepoint value obtained by the first apparatus 110 is a two-bit value of "11" which indicates maximum ranks, "2" and "2", the first apparatus 110 apply a second table entry associated with the maximum rank of "2" and also the second table entry associated with the other maximum rank of "2" for both panels, assuming both panels are having two antenna ports. That is, the second table entry may be applied separately for each of the two antenna panels of the first apparatus 110, for multi-panel simultaneous transmission towards two TRPs.

Table 3 shows an example of the second table entry to map the precoding information and number of layers field in the DCI to the TPMI. This example table entry may be mapped to second precoding information, for 2 antenna ports, if transform precoder is disabled, *maxRank* = 2, and *ul-FullPowerTransmission* is not configured or configured to *fullpowerMode2* or configured to *fullpower.*

**Table 3**

| Bit field mapped to index | *codebookSubset* = *fullyAndPartialAndNonCoherent* | Bit field mapped to index | *codebookSubset = noncoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | 0 | 2 layers: TPMI=0 |
| 5 | 1 layer: TPMI=5 | 1 | 2 layers: reserved |
| 6-7 | 1 layer: reserved | | |
| 0 | 2 layers: TPMI=0 | | |
| ... | ... | | |
| 2 | 2 layers: TPMI=2 | | |
| 3-7 | 2 layers: reserved | | |

In some example embodiments, if the codepoint values is "00" or "01" which indicates a maximum rank (e.g., 2) associated with a single table entry and a single-panel transmission mode, then the first apparatus 110 may also apply Table 3 for the single antenna panel to be applied.

It would be appreciated that the above Table 2 and Table 3 are provided for the purpose of illustration only. Other precoder tables may be designed for different codepoint values, and the scope of the present disclosure is not limited in this regard.

Based on the TPMI, the first apparatus 110 may perform (235) a transmission over an uplink shared channel, e.g., PUSCH. That is, the first apparatus 110 performs UL transmission based on the TPMI. The UL transmission may be a single-panel transmission towards a single TRP, a multi-panel transmission (e.g., SDM) towards a single-TRP, or a multi-panel transmission (e.g., SDM) towards multiple TRPs, depending on the codepoint value obtained by the first apparatus 110.

According to example embodiments of the present disclosure, multi-panel simultaneous transmission in the scenarios of single and multiple TRPs can be supported in a simple and easily adoptable way.

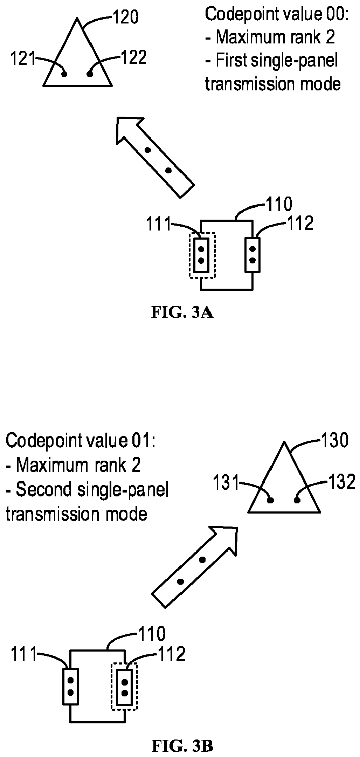

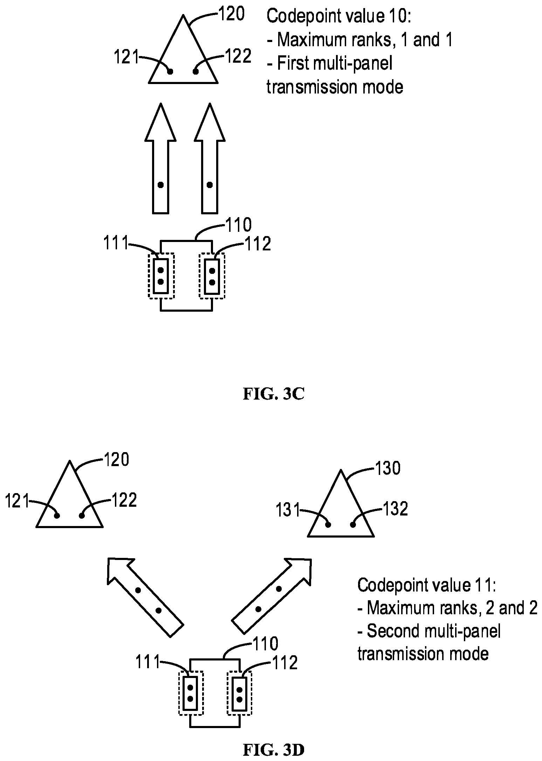

FIG. 3A to FIG. 3D illustrate example diagrams of multi-panel uplink transmissions, respectively. Specifically, FIG. 3A illustrates the case in which the codepoint value is "00", FIG. 3B illustrates the case in which the codepoint value is "01", FIG. 3C illustrates the case in which the codepoint value is "10", and FIG. 3D illustrates the case in which the codepoint value is "11". The codepoint value may be signaled in DCI, for instance, in the "SRS resource set indicator" field, or in a MAC CE.

In examples shown in FIG. 3A to FIG. 3D, it is assumed that the first apparatus 110 has two antenna panels 111 and 112, each having two transmitting antenna ports. It is further assumed that the second apparatus 120, which may be a TRP, has two receiving (RX) antenna ports 121 and 122, and the third apparatus 130, which may be another TRP, has two receiving (RX) antenna ports 131 and 132.

In the example of FIG. 3A, the first apparatus 110 receives a codepoint value "00" which indicates a SRI (e.g., SRI#0) in the first SRI resource set, PMI #0, and a maximum layers (or maximum rank) of 2. Upon reception of the codepoint value "00", the first apparatus 110 may determine that the antenna panel 111 (which is corresponding to the first SRS resource set) is to be applied for a single-panel transmission mode towards a single TRP. The first apparatus 110 may determine a table entry (or precoder table) for precoding on the antenna panel 111 based on the codepoint value "00". Then the first apparatus 110 may perform an uplink transmission based on the determined table entry, using the antenna panel 111. The second apparatus 120 may receive the uplink transmission using its antenna ports 121 and 122.

In the example of FIG. 3B, the first apparatus 110 receives a codepoint value "01" which indicates a SRI (e.g., SRI#1) in the second SRI resource set, PMI #1, and a maximum layers (or maximum rank) of 2. Upon reception of the codepoint value "01", the first apparatus 110 may determine that the antenna panel 112 (which is corresponding to the second SRS resource set) is to be applied for a single-panel transmission mode towards a single TRP. The first apparatus 110 may determine a table entry (or precoder table, e.g., TPMI) for precoding on the antenna panel 112 based on the codepoint value "01". Then the first apparatus 110 may perform an uplink transmission based on the determined table entry, using the antenna panel 112. The third apparatus 130 may receive the uplink transmission using its the antenna ports 131 and 132.

In the example of FIG. 3C, the first apparatus 110 receives a codepoint value "10" which indicates a SRI (e.g., SRI#0) in the first SRI resource set, a SRI (e.g., SRI#1) in the second SRI resource set, PMI #0, PMI #1, and two maximum layers (or maximum ranks) of 1 and 1. Upon reception of the codepoint value "10", the first apparatus 110 may determine to use the two antenna panels 111 and 112 to communicate with a single TRP, e.g., the second apparatus 120. Based on the codepoint value "01", the first apparatus 110 may further determine two table entries (or precoder tables) for precoding on the antenna panels 111 and 112, respectively.

Then, the first apparatus 110 may apply a precoder table for an uplink transmission via the antenna panel 111 and apply a precoder table for an uplink transmission via the antenna port 121. The two precoder tables may be the same in some cases, depending on the configuration. The second apparatus 120 may receive the simultaneous uplink transmissions from the first apparatus 110 using its antenna ports 121 and 122.

In the example of FIG. 3D, the first apparatus 110 receives a codepoint value "11" which indicates a SRI (e.g., SRI#0) in the first SRI resource set, a SRI (e.g., SRI#1) in the second SRI resource set, PMI #0, PMI #1, and two maximum layers (or maximum ranks) of 2 and 2. Upon reception of the codepoint value "11", the first apparatus 110 may determine to use the two antenna panels 111 and 112 to communicate with two TRPs, respectively. Based on the codepoint value "11", the first apparatus 110 may further determine two table entries (or precoder tables) for precoding on the antenna panels 111 and 112, respectively.

Then, the first apparatus 110 may apply a precoder table for an uplink transmission via the antenna panel 111 and apply a precoder table for an uplink transmission via the antenna port 121. The two precoder tables may be the same in some cases, depending on the configuration. The two precoder tables may be different from the one used in the case of codepoint value "10" because the maximum ranks are different in the two cases. The second apparatus 120 may receive an uplink transmission from the first apparatus 110 using its antenna ports 121 and 122, and the third apparatus 130 may receive an uplink transmission from the first apparatus 110 using its antenna ports 131 and 132.

It would be appreciated that some example association between codepoint values, transmission modes, and maximum rank structures are provided above under certain assumption, e.g., that the first apparatus 110 has two antenna panels each with two antenna ports, the TRPs to be communicated with the first apparatus 110 each has two antenna ports. In other communication scenarios, the first apparatus 110 may be equipped with more antenna panels and/or each panel may have more antenna ports, and/or one or more TRPs may have more than two antenna ports. In such cases, the association between codepoint values, transmission modes, and maximum rank structures may be defined to adapt to those communication scenarios. For example, if the second apparatus 120 has three receiving antenna ports, the codepoint value "10" may indicate two maximum ranks, 1 and 2, each applied to one of the antenna panels of the first apparatus 110. In some example embodiments, the codepoint may be designed with more than two bits, with more than four possible values to indicate additional transmission modes and/or maximum rank structures in the context of multi-panel simultaneous uplink transmission.

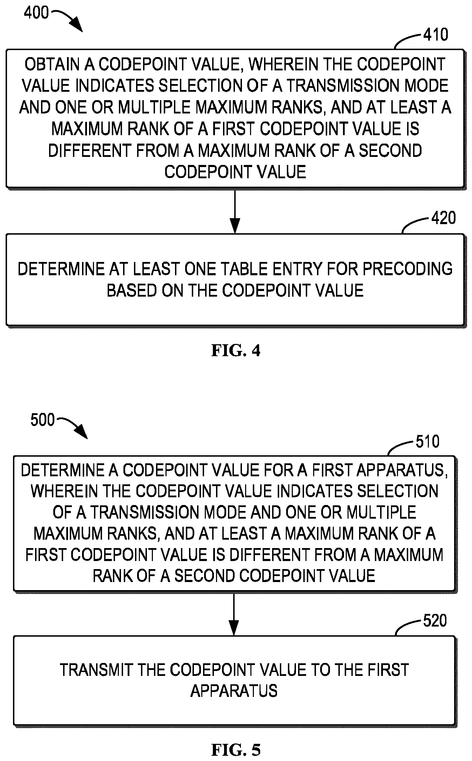

FIG. 4 shows a flowchart of an example method 400 implemented at a first apparatus in accordance with some example embodiments of the present disclosure. For the purpose of discussion, the method 400 will be described from the perspective of the first apparatus 110 in FIG. 1.

At block 410, the first apparatus 110 obtains a codepoint value, wherein the codepoint value indicates selection of a transmission mode and one or multiple maximum ranks, and at least a maximum rank of a first codepoint value is different from a maximum rank of a second codepoint value.

At block 420, the first apparatus 110 determines at least one table entry for precoding based on the codepoint value.

In some example embodiments, the codepoint value comprises one of the following: a codepoint value which indicates a maximum rank associated with a single table entry, and a first single-panel transmission mode; a codepoint value which indicates a maximum rank associated with a single table entry, and a second single-panel transmission mode; a codepoint value which indicates multiple maximum ranks associated with multiple table entries respectively, and a first multi-panel transmission mode; or a codepoint value which indicates multiple maximum ranks associated with multiple table entries respectively, and a second multi-panel transmission mode.

In some example embodiments, the codepoint value indicating the first single-panel transmission mode is a two-bit value of 00; the codepoint value indicating the second single-panel transmission mode is a two-bit value of 01; the codepoint value indicating the first multi-panel transmission mode is a two-bit value of 10; and the codepoint value indicating the second multi-panel transmission mode is a two-bit value of 11.

In some example embodiments, the first single-panel transmission mode is determined according to a sounding reference signal, SRS, resource identity, SRI, of a first SRS resource set; the second single-panel transmission mode is determined according to a SRI of a second SRS resource set; the first multi-panel transmission mode is determined according to respective SRIs of the first and second SRS resource sets, precoding information, and a number of layers; and the second multi-panel transmission mode is determined according to respective SRIs of the first and second SRS resource sets, precoding information, and a number of layers.

In some example embodiments, the maximum rank associated with the single table entry comprises a maximum rank over one; and the multiple maximum ranks associated with the multiple table entries comprise at least one of a maximum rank of one or a maximum rank over one.

In some example embodiments, the codepoint value is obtained in a DCI, or a MAC CE.

In some example embodiments, the method further comprises: determining a TPMI based on the at least one table entry.

In some example embodiments, the method further comprises: performing a transmission over an uplink shared channel based on the TPMI.

In some example embodiments, the method further comprises: transmitting capability information of the first apparatus, wherein the capability information indicates at least one of the following: a simultaneous multi-panel transmission capability, or respective transmission capabilities for multiple antenna panels.

FIG. 5 shows a flowchart of an example method 500 implemented at a second apparatus in accordance with some example embodiments of the present disclosure. For the purpose of discussion, the method 500 will be described from the perspective of the second apparatus 120 in FIG. 1.

At block 510, the second apparatus 120 determines a codepoint value for a first apparatus, wherein the codepoint value indicates selection of a transmission mode and one or multiple maximum ranks, and at least a maximum rank of a first codepoint value is different from a maximum rank of a second codepoint value.

At block 520, the second apparatus 120 transmits the codepoint value to the first apparatus.

In some example embodiments, the codepoint value comprises one of the following: a codepoint value which indicates a maximum rank associated with a single table entry, and a first single-panel transmission mode; a codepoint value which indicates a maximum rank associated with a single table entry, and a second single-panel transmission mode; a codepoint value which indicates multiple maximum ranks associated with multiple table entries respectively, and a first multi-panel transmission mode; or a codepoint value which indicates multiple maximum ranks associated with multiple table entries respectively, and a second multi-panel transmission mode.

In some example embodiments, the codepoint value indicating the first single-panel transmission mode is a two-bit value of 00; the codepoint value indicating the second single-panel transmission mode is a two-bit value of 01; the codepoint value indicating the first multi-panel transmission mode is a two-bit value of 10; and the codepoint value indicating the second multi-panel transmission mode is a two-bit value of 11.

In some example embodiments, the first single-panel transmission mode is determined according to a SRS, SRI, of a first SRS resource set; the second single-panel transmission mode is determined according to a SRI of a second SRS resource set; the first multi-panel transmission mode is determined according to respective SRIs of the first and second SRS resource sets, precoding information, and a number of layers; and the second multi-panel transmission mode is determined according to respective SRIs of the first and second SRS resource sets, precoding information, and a number of layers.

In some example embodiments, the method further comprises: receiving, capability information of the first apparatus, wherein the capability information indicates at least one of the following: a simultaneous multi-panel transmission capability, or respective transmission capabilities for multiple antenna panels, and determining the codepoint value based at least in part on the received capability information.

In some example embodiments, the method further comprises: determining at least one table entry based on the codepoint value; determining a TPMI based on the at least one table entry; and receiving, from the first apparatus, a transmission over an uplink shared channel based on the TPMI.

In some example embodiments, a first apparatus capable of performing any of the method 400 (for example, the first apparatus 110 in FIG. 1) may comprise means for performing the respective operations of the method 400. The means may be implemented in any suitable form. For example, the means may be implemented in a circuitry or software module. The first apparatus may be implemented as or included in the first apparatus 110 in FIG. 1.

In some example embodiments, the first apparatus comprises means for obtaining a codepoint value, wherein the codepoint value indicates selection of a transmission mode and one or multiple maximum ranks, and at least a maximum rank of a first codepoint value is different from a maximum rank of a second codepoint value; and means for determining at least one table entry for precoding based on the codepoint value.

In some example embodiments, the codepoint value comprises one of the following: a codepoint value which indicates a maximum rank associated with a single table entry, and a first single-panel transmission mode; a codepoint value which indicates a maximum rank associated with a single table entry, and a second single-panel transmission mode; a codepoint value which indicates multiple maximum ranks associated with multiple table entries respectively, and a first multi-panel transmission mode; or a codepoint value which indicates multiple maximum ranks associated with multiple table entries respectively, and a second multi-panel transmission mode.

In some example embodiments, the codepoint value indicating the first single-panel transmission mode is a two-bit value of 00; the codepoint value indicating the second single-panel transmission mode is a two-bit value of 01; the codepoint value indicating the first multi-panel transmission mode is a two-bit value of 10; and the codepoint value indicating the second multi-panel transmission mode is a two-bit value of 11.

In some example embodiments, the first single-panel transmission mode is determined according to a sounding reference signal, SRS, resource identity, SRI, of a first SRS resource set; the second single-panel transmission mode is determined according to a SRI of a second SRS resource set; the first multi-panel transmission mode is determined according to respective SRIs of the first and second SRS resource sets, precoding information, and a number of layers; and the second multi-panel transmission mode is determined according to respective SRIs of the first and second SRS resource sets, precoding information, and a number of layers.

In some example embodiments, the maximum rank associated with the single table entry comprises a maximum rank over one; and the multiple maximum ranks associated with the multiple table entries comprise at least one of a maximum rank of one or a maximum rank over one.

In some example embodiments, the codepoint value is obtained in a downlink control information, DCI, or a media access control, MAC, control element, CE.

In some example embodiments, the first apparatus may further comprise: means for determining a transmit precoding matrix identity, TPMI, based on the at least one table entry.

In some example embodiments, the first apparatus may further comprise: means for performing a transmission over an uplink shared channel based on the TPMI.

In some example embodiments, the first apparatus may further comprise: means for transmitting capability information of the first apparatus, wherein the capability information indicates at least one of the following: a simultaneous multi-panel transmission capability, or respective transmission capabilities for multiple antenna panels.

In some example embodiments, the first apparatus further comprises means for performing other operations in some example embodiments of the method 400 or the first apparatus 110. In some example embodiments, the means comprises at least one processor; and at least one memory storing instructions that, when executed by the at least one processor, cause the performance of the first apparatus.

In some example embodiments, a second apparatus capable of performing any of the method 500 (for example, the second apparatus 120 in FIG. 1) may comprise means for performing the respective operations of the method 500. The means may be implemented in any suitable form. For example, the means may be implemented in a circuitry or software module. The second apparatus may be implemented as or included in the second apparatus 120 in FIG. 1.

In some example embodiments, the second apparatus comprises means for determining a codepoint value for a first apparatus, wherein the codepoint value indicates selection of a transmission mode and one or multiple maximum ranks, and at least a maximum rank of a first codepoint value is different from a maximum rank of a second codepoint value; and means for transmitting the codepoint value to the first apparatus.

In some example embodiments, the codepoint value comprises one of the following: a codepoint value which indicates a maximum rank associated with a single table entry, and a first single-panel transmission mode; a codepoint value which indicates a maximum rank associated with a single table entry, and a second single-panel transmission mode; a codepoint value which indicates multiple maximum ranks associated with multiple table entries respectively, and a first multi-panel transmission mode; or a codepoint value which indicates multiple maximum ranks associated with multiple table entries respectively, and a second multi-panel transmission mode.

In some example embodiments, the codepoint value indicating the first single-panel transmission mode is a two-bit value of 00; the codepoint value indicating the second single-panel transmission mode is a two-bit value of 01; the codepoint value indicating the first multi-panel transmission mode is a two-bit value of 10; and the codepoint value indicating the second multi-panel transmission mode is a two-bit value of 11.

In some example embodiments, the first single-panel transmission mode is determined according to a sounding reference signal, SRS, resource identity, SRI, of a first SRS resource set; the second single-panel transmission mode is determined according to a SRI of a second SRS resource set; the first multi-panel transmission mode is determined according to respective SRIs of the first and second SRS resource sets, precoding information, and a number of layers; and the second multi-panel transmission mode is determined according to respective SRIs of the first and second SRS resource sets, precoding information, and a number of layers.

In some example embodiments, the second apparatus further comprises means for performing other operations in some example embodiments of the method 500 or the second apparatus 120. In some example embodiments, the means comprises at least one processor; and at least one memory storing instructions that, when executed by the at least one processor, cause the performance of the second apparatus.

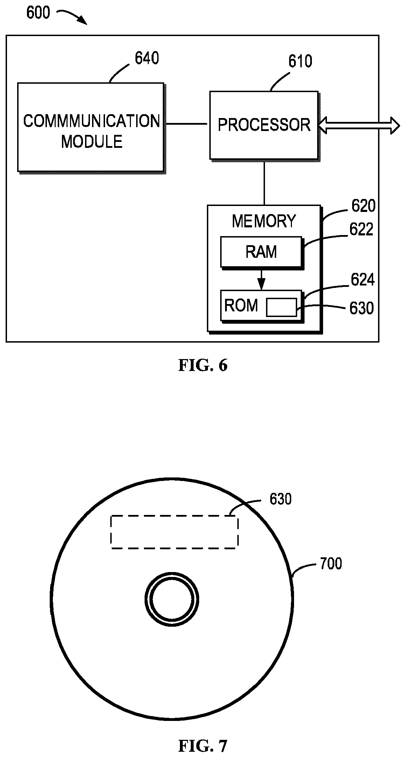

FIG. 6 is a simplified block diagram of a device 600 that is suitable for implementing example embodiments of the present disclosure. The device 600 may be provided to implement a communication device, for example, the first apparatus 110, the second apparatus 120, or the third apparatus 130 as shown in FIG. 1. As shown, the device 600 includes one or more processors 610, one or more memories 620 which may be coupled to the processor 610, and one or more communication modules 640 which may be coupled to the processor 610.

The communication module 640 is for bidirectional communications. The communication module 640 has one or more communication interfaces to facilitate communication with one or more other modules or devices. The communication interfaces may represent any interface that is necessary for communication with other network elements. In some example embodiments, the communication module 640 may include at least one antenna. The communication interface may be hardware or software based interface. For example, the communication interface may be one or more transceivers. The one or more transceivers may be coupled to one or more antennas or antenna ports to wirelessly transmit and/or receive communication signals. The antennas or antenna ports may be the same or different types. The antennas or antenna ports may be located in different positions of an apparatus. The one or more transceivers allow the apparatus to communicate with other devices that may be wired and/or wireless. The transceiver may support one or more radio technologies. For example, the one or more transceivers may include a cellular subsystem, a WLAN subsystem, and/or a Bluetooth^{™} subsystem. The one or more transceivers may include processors, controllers, radios, sockets, plugs, buffers, or the like circuits to form one or more communication channels to one or more radio frequency units.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a Read Only Memory (ROM) 624, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 622 and other volatile memories that will not last in the power-down duration.

A computer program 630 includes computer executable instructions that are executed by the associated processor 610. The instructions of the program 630 may include instructions for performing operations/acts of some example embodiments of the present disclosure. The program 630 may be stored in the memory, e.g., the ROM 624. The processor 610 may perform any suitable actions and processing by loading the program 630 into the RAM 622.

The example embodiments of the present disclosure may be implemented by means of the program 630 so that the device 600 may perform any process of the disclosure as discussed with reference to FIG. 2 to FIG. 5. The example embodiments of the present disclosure may also be implemented by hardware or by a combination of software and hardware.

In some example embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 7 shows an example of the computer readable medium 700 which may be in form of CD, DVD or other optical storage disk. The computer readable medium 700 has the program 630 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, obj ects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable subcombination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A first apparatus comprising:
means for obtaining a codepoint value, wherein the codepoint value indicates selection of a transmission mode and one or multiple maximum ranks, and at least a maximum rank of a first codepoint value is different from a maximum rank of a second codepoint value; and
means for determining at least one table entry for precoding based on the codepoint value.

2. A second apparatus comprising:
means for determining a codepoint value for a first apparatus, wherein the codepoint value indicates selection of a transmission mode and one or multiple maximum ranks, and at least a maximum rank of a first codepoint value is different from a maximum rank of a second codepoint value; and
means for transmitting the codepoint value to the first apparatus.

3. The apparatus of claim 1 or 2, wherein the codepoint value comprises one of the following:
a codepoint value which indicates a maximum rank associated with a single table entry, and a first single-panel transmission mode;
a codepoint value which indicates a maximum rank associated with a single table entry, and a second single-panel transmission mode;
a codepoint value which indicates multiple maximum ranks associated with multiple table entries respectively, and a first multi-panel transmission mode; or
a codepoint value which indicates multiple maximum ranks associated with multiple table entries respectively, and a second multi-panel transmission mode.

4. The apparatus of claim 3, wherein:
the codepoint value indicating the first single-panel transmission mode is a two-bit value of 00;
the codepoint value indicating the second single-panel transmission mode is a two-bit value of 01;
the codepoint value indicating the first multi-panel transmission mode is a two-bit value of 10; and
the codepoint value indicating the second multi-panel transmission mode is a two-bit value of 11.

5. The apparatus of claim 3 or 4, wherein:
the first single-panel transmission mode is determined according to a sounding reference signal, SRS, resource identity, SRI, of a first SRS resource set;
the second single-panel transmission mode is determined according to a SRI of a second SRS resource set;
the first multi-panel transmission mode is determined according to respective SRIs of the first and second SRS resource sets, precoding information, and a number of layers; and
the second multi-panel transmission mode is determined according to respective SRIs of the first and second SRS resource sets, precoding information, and a number of layers.

6. The apparatus of any of claims 3 to 5, wherein:
the maximum rank associated with the single table entry comprises a maximum rank over one; and
the multiple maximum ranks associated with the multiple table entries comprise at least one of a maximum rank of one or a maximum rank over one.

7. The apparatus of any claim 1 to 6, wherein the codepoint value is carried in a downlink control information, DCI, or a media access control, MAC, control element, CE.

8. The first apparatus of any of claims 1 to 7, further comprising:
means for determining a transmit precoding matrix identity, TPMI, based on the at least one table entry.

9. The first apparatus of claim 8, further comprising:
means for performing a transmission over an uplink shared channel based on the TPMI.

10. The first apparatus of any of claims 1 to 9, further comprising:
means for transmitting capability information of the first apparatus, wherein the capability information indicates at least one of the following: a simultaneous multi-panel transmission capability, or respective transmission capabilities for multiple antenna panels.

11. A method comprising:
obtaining, at a first apparatus, a codepoint value, wherein the codepoint value which indicates selection of a transmission mode and one or multiple maximum ranks, and at least a maximum rank of a first codepoint value is different from a maximum rank of a second codepoint value; and
determining at least one table entry for precoding based on the codepoint value.

12. A method comprising:
determining, at a second apparatus, a codepoint value for a first apparatus, wherein the codepoint value indicates selection of a transmission mode and one or multiple maximum ranks, and at least a maximum rank of a first codepoint value is different from a maximum rank of a second codepoint value; and
transmitting the codepoint value to the first apparatus.

13. A computer-readable medium storing program instructions that, when executed by an apparatus, cause the apparatus to perform a method of claim 11 or 12.
